# EUROPEAN PATENT APPLICATION

(11) **EP 1 149 957 A2**
(43) Date of publication of application: **31.10.2001**
(21) Application number: 01660039.7
(22) Date of filing: 01.03.2001
(51) Int. Cl.: E04B 1/24

(54) **Profile bar system**

(30) Priority: 02.03.2000 FI 20000485
(71) Applicant: Fennotek Oy, 00200 Helsinki (FI)
(72) Inventor: Apajalahti, Risto, 02300 Espoo (FI)
(74) Representative: Savolainen, Seppo Kalevi

(57) **Abstract**

The invention relates to a profile bar system for providing frames for apparatuses and machines, where profile bars (1) are fastened to one another at a right angle using profile bar joints between the sides and ends (8) of the bars (1), the system comprising a basic profile bar (1), the crosscut of which is a four-armed branch that is symmetrical in relation to the vertical and horizontal symmetrical axes so that each angle of the bar (1) comprises a profile recess (5), which in crosscut is right-angled and equal in size, for receiving and fastening joint connectors (6) and supporting boards or structural boards (7), and whereby the end of a similar profile bar (1) to be fastened to the side of the basic profile bar (1) is provided with an end flange (8) that corresponds with the branch shape that can be shape-mated to the side of the bar (1) so that it is immediately attached to the part of the side bar that corresponds to the face side (3) of the branch, and to the profile recesses (5) through the joint connectors (6).

## Description

### BACKGROUND OF THE INVENTION

The invention relates to a profile bar system for providing frames for apparatuses and machines where profile bars are fastened to one another at a right angle using profile bar joints between the sides and ends of the bars.

According to the prior art apparatus and machine frames are made of differently shaped tubes, board constructions or of a combination of tubes and boards. Steel and aluminium are generally used as the building materials. In steel construction different kinds of tubes are used including furniture tubes, from which apparatus frames are built mainly using welding. Aluminium construction, in turn, employs different structural tubes, from which frames can be built using welding, and aluminium profile systems produced by different manufacturers that include fastening systems for connecting the profiles together.

Automation has set new and tightened requirements for frame construction. The apparatuses are expected to be developed more rapidly and at the same time the structures are assumed to be more precisely reproduced and accurately measured.

Welded steel tube frames provide stiff frame structures, which are vitally important in order for an apparatus to operate, for example when robotics construction is concerned. However, a drawback in the welded constructions is the uneven welding tolerance, which is frequently inadequate in precise instruments. An accurately measured frame requires the different fastening surfaces welded into the frame to be mechanized after being assembled using welding. To make this type of frames is therefore not possible without massive equipment used in industrial production. In addition, a frame welded when constructing proto types or other unique apparatuses may have to be totally renewed after the results have been obtained from the test phase.

The completed aluminium profile systems, to which the present invention belongs, are in turn mainly based on fastening the profiles to one another using screw joints. In advanced apparatus construction, such as accurate robotics production, an apparatus frame built using only screw joints cannot be accepted in most cases. A load may cause the apparatus frame to bend in the screw joints thereof in such a manner that permanent dislocations appear between the different frame parts. If, in turn, completed welded aluminium tubes are used in the same way as steel tubes, the same problems arise as with the welded steel tube constructions.

A further drawback with the steel tube and conventional profile constructions is in addition to the above facts that they lack means for fastening and positioning the structural boards to be fastened to the frame, as no notice has been paid on how the structural boards are fastened and integrated into the beam frame structure.

### BRIEF DESCRIPTION OF THE INVENTION

It is an object of the present invention to remove the above limitations and drawbacks and to provide an adequately stiff profile bar system for providing frames for apparatuses and machines in which structural boards are systematically fastened to the profile bars of the frame, said profile bar system being able to be welded into an integrated fixed structure after an accurate mechanical fastening is carried out.

This object is achieved with a system of the invention, characterized by what is claimed in the characterizing part of claim 1.

The invention is based on a system to be built around a basic profile, which in crosscut is symmetrical in both vertical and horizontal directions, and in which the profiles can be shape-mated together without any actual additional fasteners, the profile angles comprising profile grooves that enable the structural boards used with the system to be shape-mated without additional fasteners and the continuous plane surfaces to be built.

### BRIEF DESCRIPTION OF THE DRAWINGS

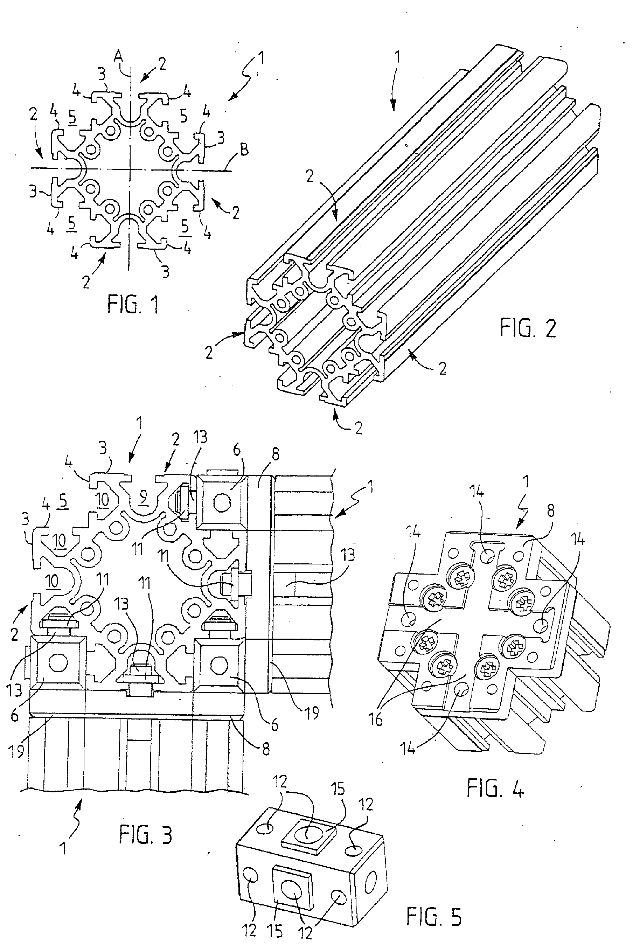

In the following the invention will be described in greater detail by means of a preferred embodiment with reference to the attached drawings, in which
Figure 1 is a sectional view showing a basic profile bar,
Figure 2 is a perspective view showing the basic profile bar,
Figure 3 shows the joints between the basic profile bars,
Figure 4 shows an end flange fastened to the end of the basic profile bar,
Figure 5 shows a joint connector,

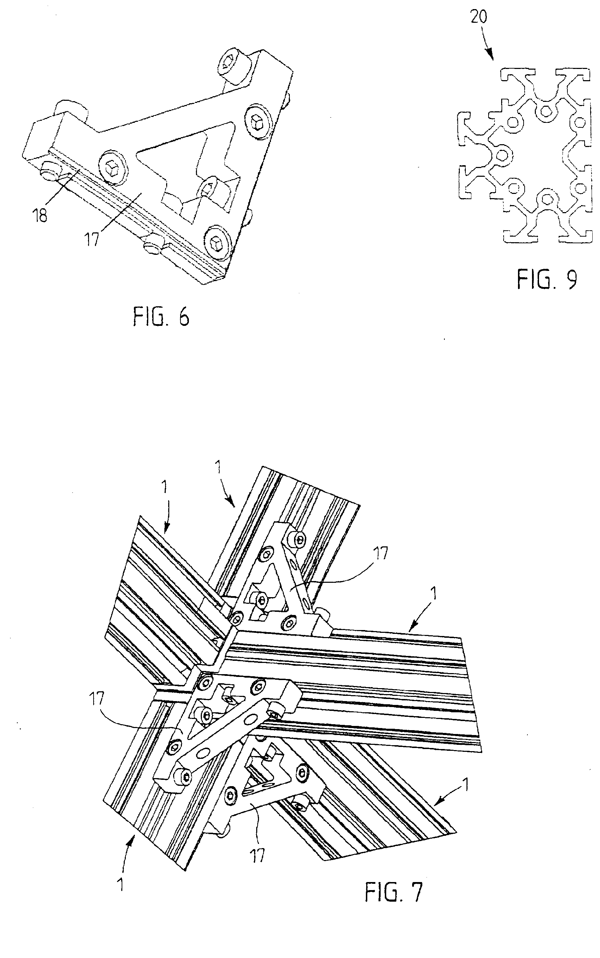

Figure 6 shows an angle stiffener,
Figure 7 shows the joints between the basic profile bars where the angle stiffeners are used,

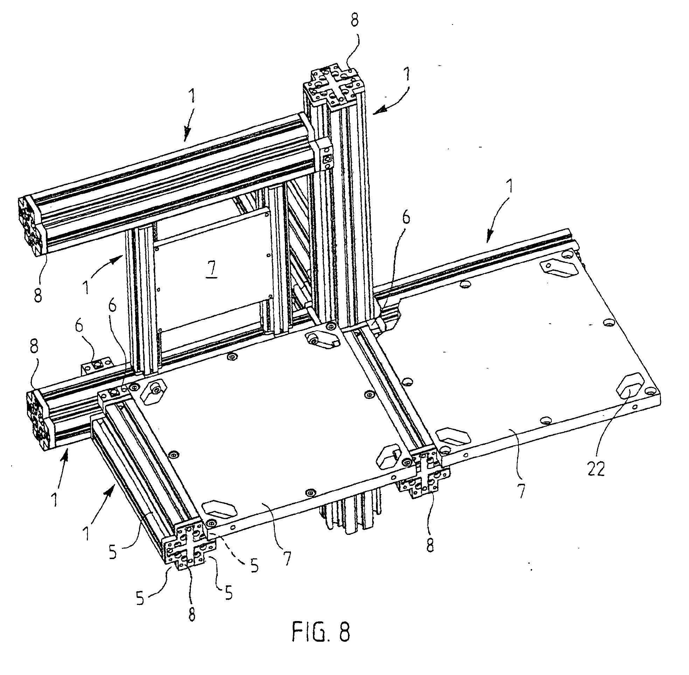

Figure 8 shows a part of the system of the invention, and
Figure 9 is a sectional view showing an auxiliary profile bar.

### DETAILED DESCRIPTION OF THE INVENTION

The basic profile used in the system of the invention shown in the drawings is preferably a profile bar 1 made of aluminium, the crosscut of which is a four-armed branch that is symmetrical in relation to the vertical and horizontal symmetrical axes A, B, where each branch 2 comprises a face side 3 and two sides 4 attached thereto, whereby the face sides 3 of the branches 2 on the opposite sides of the profile are parallel, the sides 4 of the adjacent branches 2 form a right angle between them, the sides 4 of the branches 2 placed on the opposite sides are in line with one another, and the sides 4 of the branches 2 are equal in length, meaning that the branches 2 are equal in height. To be more precise, the profile of the invention is achieved by removing a square part from each angle of the original bar that corresponds to a square in crosscut, resulting in a bar having twelve angles in crosscut.

Consequently a profile recess 5 that in crosscut is right-angled and equal in size is formed at each angle of the basic profile bar 1 for receiving and fastening structural boards 7 and joint connectors 6.

The end of the bar 1, at least when it is fastened to the side of a similar bar 1, is provided with an end flange 8 corresponding to said branch shape and fastened using for example screws (and/or using welding) to the end of the bar 1, and the end flange can then be shape-mated to the side of the bar 1 so that it is immediately fastened to the part of the side that corresponds to the face side 3 of the branch, and to the profile recesses 5 through the connectors 6. In order to carry out welding the end flange 8 is preferable provided with welding bevels 19.

For such a fastening the sides of the bars corresponding to the face sides 3 of the branches and the sides 4 of the profile recesses 5 each comprises a longitudinal groove 9, 10 for fastening means, such as nuts 11. Alternatively the grooves at the sides 4 of the profile recesses 5 can be replaced with tapped holes or clearance holes (not shown in the drawings) placed in the same line at regular intervals.

The connector 6, which is shape-mated between the bars 1 to be fastened to the profile recess 5 at a right angle to one another, preferably resembles a square in crosscut, the length of which corresponds to the breadth of the branch 2 and the height of the side corresponds to the height of the side 4 of the profile recess 5. The connector 6 comprises fastening holes 12, which pass through the connector from two adjacent sides, and which are matched with the fastening grooves 10 or holes of the profile recess 5 when mounted into the profile recess 5.

The end flange 8 of the second bar 1 to be fastened to the side of the bar 1 comprises, in turn, fastening holes 14 for fastening screws 13, which are open towards the fastening grooves 9 of the face sides 3 of the bar to be fastened, and which are matched with the holes 12 of the joint connectors 6 and the fastening grooves 9 of the face sides 3 of the bar when fastening the bars 1 with one another.

The joint connector 6 comprises at the fastening holes of two adjacent sides elevations 15 that are intended to co-operate with corresponding crosswise positioning grooves 16 formed on the surface of the end flange 8. The breadth of the positioning grooves 16 correspond to the breadth of the elevations 15, and the grooves are machined to the flange 8 so that they open from their first ends towards the end of two adjacent branches 2 but extend from their second ends in the two remaining branches 2 for a distance, to which the elevation 15 extends, when the holes 12, 14 of the flange 8 and the joint connector 6 are in line with one another. Thus, the bars 1 to be fastened with one another are set exactly at a correct angle and level in relation to one another.

The height of the sides 4 of the profile recesses 5 (the length of the side 4 of the branch 2) is preferably the same as the thickness of the supporting levels or structural boards 7 used in the system at the edges thereof, in which case the surfaces of the structural boards 7 and the profile bars 1 fastened together are placed at the same level. Thus, large continuous building plane surfaces can be formed even using small structural boards 7, to which the intersecting profile recesses 5 of the bars 1 form a shape-mated mounting and fastening position as well as a required support. The sides 4 of the profile recesses 5 can be used as the reference levels of the structural board 7 fastening, against which the structural boards 7 are fastened in addition to a conventional support. In accurately positioning robotics applications the system of the invention allows the structural boards 7 to be accurately fastened to be immobile from three directions perpendicularly placed against one another.

The assembly of the system according to the invention is carried out as follows. During an initial assembly stage of an apparatus or machine frame the connectors 6 can be accurately pre-fastened in advance using length measurement instruments to the detached separate profile bars 1 at the positions to which an intersecting bar or bars 1 are meant to be fastened in this particular case. At the following assembly stage, where the bars 1 are fastened together to form an apparatus frame, the system of the invention allows to insert the intersecting bars 1 into the connectors 6 located at their pre-set positions. When inserting the bar 1 into position, the positioning grooves 16 in the bar's end flange 8 brings the bar 1 into a stop at the elevation 15 on the joint connector 6, placing the outer surfaces of the bars 1 at the same level as desired. As a result an apparatus frame that is accurately assembled according to measure is achieved.

At the following assembly stage the frame is preferably stiffened using angle stiffeners 17 which are mounted at an angle formed by two interconnected bars 1. The stiffeners 17 are initially fastened using screws and then preferably also welded.

This plate-like angle stiffener 17 to be welded is appropriately formed to have a thickness that equals the height of the side 4 of the profile recess 5, in which case it can be embedded into a cavity embedding formed of the profile recesses 5 in the basic profile bars 1 to be connected, and the surface thereof is thus set at the outer surface level of the bars 1.

Clearance holes are arranged to the angle stiffener 17 for screws to be fastened from three directions perpendicularly facing one another so that two bars 1 to be stiffened together and perpendicularly placed in relation to one another are fastened together from three directions perpendicularly facing one another.

In addition, the edges of the angle stiffener 17, which are to be matched with the profile recesses 5, are provided with bevels 18, thus forming a completed welding groove bevel between the profile recess 5 and the angle stiffener 17 for welding the angle stiffener of the bars 1 together.

The structural boards 7 are preferably provided with through openings or adequately deep openings 21 at the angles so as to fasten the structural board 7 to remain immovable to the profile recesses 5 using screws against the sides 4 of the branch 2 used as reference levels.

Eventual welding is carried out at the final assembly stage in such a manner that the end flanges 8 are welded to specific basic profile bars 1 and to the intersecting basic profile bar 1 at the welding bevels 19 of the end flange 8. The angle stiffeners 17 are welded to both basic profile bars 1 to be connected at the welding bevels 18 of the angle stiffener 17 and if needed also from the back of the angle stiffener 17 using a fillet weld.

The system may employ in addition to the basic profile bar 1 other profile bars that are at least partly compatible therewith, such as a three-branched bar 20 shown in Figure 9 that is achieved by leaving one branch out of the basic profile bar 1. The branchless side of the bar 20 may be placed for example on the outer side of the frame structure or against a wall, in which case supporting boards or structural boards 7 are not fastened to said side of the bar 20.

The invention is described above by means of only one preferable illustrative system. However, a person skilled in the art may implement the details thereof in various alternative ways within the scope of the appended claims.

## Claims

1. A profile bar system for providing frames for apparatuses and machines, where profile bars (1) are fastened to one another at a right angle using profile bar joints between the sides and ends (8) of the bars (1), the system comprising a basic profile bar (1), the crosscut of which is a four-armed branch, whereby at least one end of another similar profile bar (1) to be fastened at the side of the basic profile bar (1) is provided with an end flange (8) that can be shape-mated to the side of the bar (1), **characterized in**
**that** each branch (2) of the four-armed branch comprises a face side (3) and two sides (4) connected thereto, the face sides (3) of the branches (2) placed on the opposite sides are parallel, the sides (4) of the adjacent branches (2) form a right angle between them, the sides (4) of the branches (2) placed on the opposite sides are in line with one another, and the sides (4) of the branches (2) are equal in length,
whereby each angle of the basic profile bar (1) comprises a profile recess (5), which in crosscut is right-angled and equal in size, for receiving and fastening joint connectors (6) and supporting boards or structural boards (7), and
that the shape of the end flange (8) corresponds with the branch shape and it is immediately fastened to the part of the side of the bar that corresponds to the face side (3) of the branch, and through the joint connectors (6) to the profile recesses (5).

2. A system as claimed in claim 1, **characterized by** further comprising an auxiliary profile bar (20), the crosscut of which corresponds to a three-armed branch that is achieved by leaving out one of the branches (2) of the basic profile bar (1).

3. A system as claimed in claim 1 or 2, **characterized in that** the bar sides corresponding to the face sides (3) of the branches and the sides (4) of the profile recesses (5) each comprises a longitudinal groove (9, 10) intended for fastening means, such as nuts (11).

4. A system as claimed in claim 1 or 2, **characterized in that** the bar sides corresponding to the face sides (3) of the branches each comprises a longitudinal groove (9) intended for fastening means, such as nuts (11), and the sides (4) of the profile recesses (5) each comprises tapped holes or clearance holes placed in the same line at regular intervals.

5. A system as claimed in any one of preceding claims, **characterized in that** in crosscut the joint connector (6) resembles a square, whose length corresponds with the breadth of the branch (2) and the height of the side corresponds with the height of the side (4) of the profile recess (5), the joint connector (6) comprises fastening holes (12), which pass through the connector from two adjacent sides, and which are matched with the fastening grooves (9, 10) or the holes of the profile recess (5), and that the end flange (8) of the second bar (1) to be fastened at the side of the first bar (1) comprises fastening holes (14) for fastening screws (13), which are open towards the fastening grooves (9) of the face sides (3) of the branches (2) of the second bar (1), and which are matched with the holes (12) of the joint connectors (6) and the fastening grooves (9) of the face sides (3) of the branches (2) of the first bar (1).

6. A system as claimed in claim 5, **characterized in that** the two adjacent sides of the joint connector (6) comprise at the fastening holes (12) elevations (15) that co-operate with the corresponding positioning grooves (16) provided in the end flange (8).

7. A system as claimed in any one of preceding claims, **characterized by** further comprising an angle stiffener (17) to be used for stiffening the angle formed of two interconnected bars (1), the thickness of the stiffener (17) corresponding with the height of the side (4) of the profile recess (5).

8. A system as claimed in any one of preceding claims, **characterized in that** the thickness of the supporting board (7) to be fastened to the profile recesses (5) of the bars (1) corresponds with the height of the side (4) of the profile recess (5).
